# EUROPEAN PATENT SPECIFICATION

(11) **EP 0 950 807 B1**
(45) Date of publication and mention of the grant of the patent: **19.06.2002**
(21) Application number: 98106866.1
(22) Date of filing: 16.04.1998
(51) Int. Cl.: F02F 1/00, F16J 15/08

(54) **Metal gasket**
Metallische Flachdichtung
Joint plat métallique

(43) Date of publication of application: 20.10.1999
(73) Proprietor: Carl Freudenberg KG, 69469 Weinheim (DE)
(72) Inventor: Yoshino, Nobuo, Fukushima-ken (JP)

(56) References cited:
- PATENT ABSTRACTS OF JAPAN vol. 98, no. 5, 30 April 1998 (1998-04-30) & JP 10 002421 A (KET), 6 January 1998 (1998-01-06)
- PATENT ABSTRACTS OF JAPAN vol. 97, no. 10, 30 October 1997 (1997-10-30) & JP 09 152036 A (KET), 10 June 1997 (1997-06-10)
- PATENT ABSTRACTS OF JAPAN vol. 95, no. 8, 29 September 1995 (1995-09-29) & JP 07 119837 A (KET), 12 May 1995 (1995-05-12)

## Description

### DETAILED DESCRIPTION OF THE INVENTION

### INDUSTRIAL FIELD

The present invention relates to a metal gasket interposed between a mating surface of an open deck type cylinder block, in which a cast type cylinder sleeve or a cylinder liner with a flange is provided in the inner periphery of a cylinder bore and a cooling water passage is formed endlessly or half-endlessly in the outer periphery of a cylindrical portion encircling the cylinder bore, and a mating surface of a cylinder head.

### PRIOR ART

In recent gasoline engines or diesel engines, it has been generalised, in order to reduce the weight and to speed up the production, the cylinder heads and the cylinder blocks have been formed of aluminium.

Among them, the cylinder block is produced using the diecast method as the procedure for enhancing productivity. Unlike the low pressure casting method, diecast casting is the procedure, which requires no "core", and in which casting, cooling and removal of products are carried out by metallic moulds with a draft, thereby releasing short tact periods.

In the cylinder block formed by the diecasting as described above, the open deck type is employed in which a cooling water passage is formed endlessly in the outer periphery of the cylindrical portion encircling the cylinder bore.

Patent abstracts of the Japan, publication No. 07119837, publication date 12-05-1995 discloses a metal gasket interposed in mating surfaces of an open deck type cylinder block and a cylinder head. The metal gasket contains a first substrate which is positioned at the side of the cylinder block and is separated into a combustion chamber side substrate and an outer shell side substrate. The metal gasket further contains an integrating type second substrate positioned at the side of a cylinder head and an integrating type and flat auxiliary plated interposed between the first and second substrates. Concurrently, the circumference of a combustion chamber hole is held by a grommet, cooling water holes corresponding to the position of the cooling water passage are bored in the second substrate and the auxiliary plate.

Patent abstracts of Japan, publication No. 10002421, publication date 06-01-1998 describes a metal gasket interposed between a cylinder block and a cylinder head. The metal gasket contains a soft auxiliary base and a hard elastic base thicker than the auxiliary base. A combustion chamber hole larger than the combustion chamber hole of the auxiliary plate is formed in the elastic base, and a grommet is fitted around the combustion chamber hole of the auxiliary base. A molybdenum film is coated on the outer surface of the grommet.

A further metal gasket designed to intervene between the mating surfaces of a cylinder head and a cylinder block is described in patent abstracts of Japan, publication No. 09152036, publication date 10-06-1997. The metal gasket comprises first and second substrates formed of hard metallic substrates stacked one on the other, with a grommet fitted around a combustion-chamber hole.

### PROBLEM TO BE SOLVED BY THE INVENTION

In the case where the metal gasket is interposed between the mating surfaces of the cylinder head and the cylinder block, bolting is made in the state in which the metal gasket is sandwiched between the outer wall of the cylinder block and the cylinder head, and therefore when the engine is operated under load, the cylindrical portion of the cylinder block shows independent behavior different from the outer wall of the cylinder block having a bolted portion. Because of this, the metal gasket comes in contact with the upper surface of the cylindrical portion of the cylinder block and vibrates, thus posing a problem in that roughness occurs on the surface of the metal gasket, cracks occur in beads formed on the metal gasket, and blow-by of combustion gas from the cylinder bore tends to occur.

On the other hand, in the case where the inner periphery of the cylinder bore has a cast type cylinder sleeve or a cylinder liner with a flange, there occurs the problem in that due to the bolting force or the pressing force of the metal gasket at the time of combustion, a depression occurs in the cylinder sleeve or the cylinder liner, resulting in deformation.

The present invention is achieved in order to overcome these problems as noted above. An object of the present invention is to provide a metal gasket interposed between a mating surface of an open deck type cylinder block, in which a cast type cylinder sleeve or a cylinder liner with a flange is provided in the inner periphery of a cylinder bore and a cooling water passage is formed endlessly or half-endlessly in the outer periphery of a cylindrical portion encircling the cylinder bore, and a mating surface of a cylinder head, whereby a depression or deformation of the cylinder sleeve or the cylinder liner is prevented, and a sealing performance of high durability is secured.

### MEANS FOR SOLVING THE PROBLEM

For achieving the aforesaid object, according to the present invention, there is provided a metal gasket interposed between a mating surface of an open deck type cylinder block, in which a cast type cylinder sleeve or a cylinder liner with a flange is provided in the inner periphery of cylinder bore and a cooling water passage is formed endlessly or half-endlessly in the outer periphery of a cylindrical portion encircling the cylinder bore, and a mating surface of a cylinder bead, wherein a grommet applied with a molybdenum film on the outer surface thereof is provided, along the inner periphery of the cylinder bore, at a base plate interposed over both the cylindrical portion of said cylinder block and an outer wall forming the outside of said cooling water passage, said grommet having an extension piece extending to the vicinity of the inner periphery of said cooling water passage on the cylinder block side and having a turn piece on the cylinder head side, said turn piece having its outer periphery close to the outside of said cylinder sleeve or on the upper surface of the flange of said cylinder liner, the total thickness of the extension piece and the turn piece of said grommet and said base plate put one upon another is larger in thickness and thicker than the other parts, beads are formed on said base plate and the extension piece of said grommet from the outside of the turn piece of said grommet to the outer periphery of the cylindrical portion of said cylinder block, whereas the total thickness of a sub-plate over the upper surface of the outer wall of said cylinder block secured to said base plate is smaller than said largest thickness portion, and both of or one of said base plate and said sub-plate (are) is formed with beads.

Preferably, the inner peripheral end of said grommet, in the inner peripheral side of the cylinder bore, at said base plate is pressed whereby the thickness of the turn piece and the extension piece put of said grommet upon another is smaller than said largest thickness portion.

Preferably, a molybdenum film is applied to the outer surface of the grommet.

Preferably, rubber film or molybdenum is applied to the other portions than said grommet.

Alternatively, the rubber film is applied to a contact surface on the base plate side of said sub-plate to secure said sub-plate to said base plate by securing means such as a rivet or the like.

Alternatively, the contact surface on the base plate side of said sub-plate is not provided with a film, and beads are formed in the state in which said sub-plate is secured to said base plate by an adhesive.

### MODE OF EMBODIMENTS OF THE INVENTION

The embodiments of the present invention will be described hereinafter with reference to the drawings.

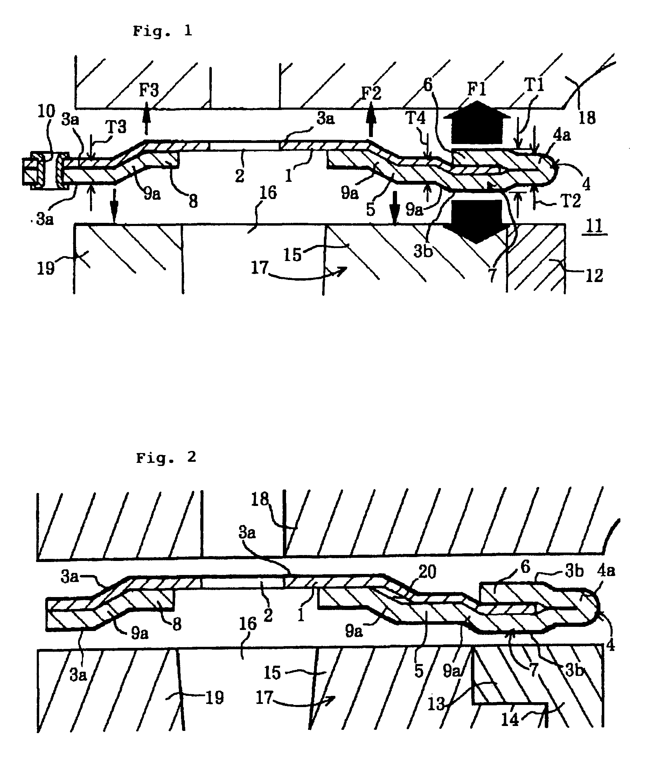

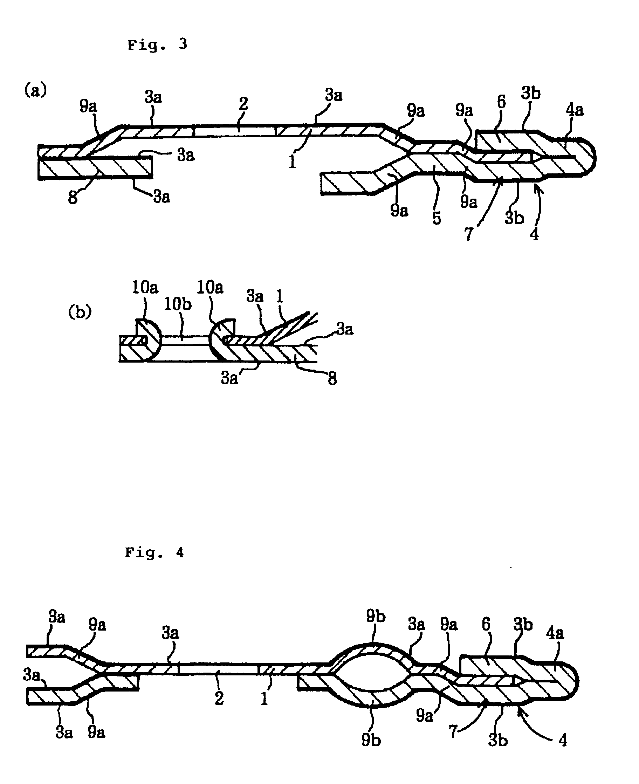

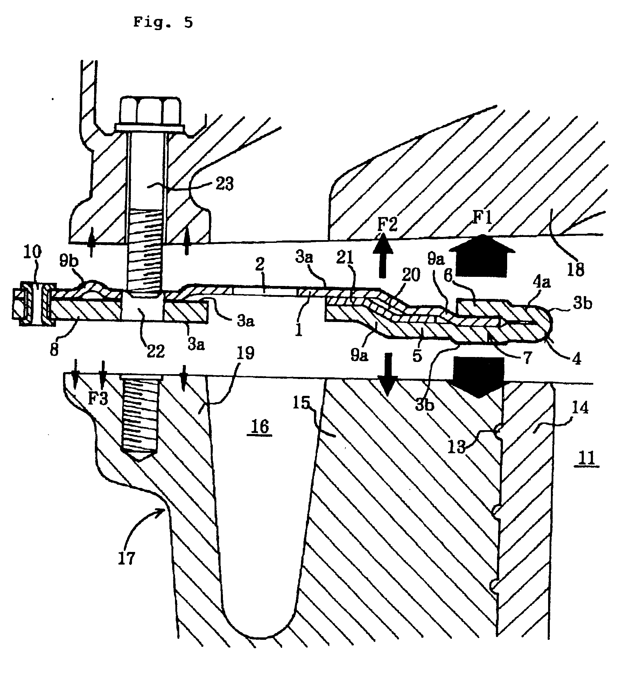

Fig. 1 is a sectional view showing Embodiment 1 of a metal gasket according to the present invention. Fig. 2 is a sectional view showing Embodiment 2 of a metal gasket according to the present invention. Fig. 3(a) is a sectional view showing Embodiment 3 of a metal gasket according to the present invention. Fig. 3(b) is a sectional view in which a base plate and a sub-plate are fixed by a notch of the sub plate. Fig. 4 is a sectional view showing Embodiment 4 of the metal gasket according to the present invention. Fig. 5 is a sectional view showing Embodiment 5 of the metal gasket according to the present invention.

As shown in Figs. 1 and 2, a metal gasket according to the present invention is interposed between a mating surface of an open deck type cylinder block 17, in which a cast type cylinder sleeve 12 (see Fig. 1) or a cylinder liner 11 with a flange 13 (see Fig. 2 or 5) is provided in the inner periphery of a cylinder bore 11 and a cooling water passage 16 is formed endlessly or half-endlessly (which is the state in which the cooling water passage 16 is not formed completely endlessly in the outer periphery of the cylindrical portion 15, but the cylindrical portion 15 and the outer wall 19 are partly connected) in the outer periphery of a cylindrical portion 15 of the cylinder block encircling the cylinder bore 11, and a mating surface of a cylinder head 18.

### Embodiment 1

The metal gasket shown in Fig. 1 is formed with a base plate 1 formed from a hard stainless steel plate so that the latter can be interposed over both the cylindrical portion 15 of the cylinder block 17 and the outer wall 19 constituting the outside of the cooling water passage 16, and formed with a plurality of cooling water holes 2 leading to the cooling water passage 16.

A grommet 4 formed, for example, from a soft stainless plate and applied with a molybdenum film 3b to the entire outer surface is provided along the inner periphery of the cylinder bore 11 of the base plate 1. The grommet 4 is formed to have an extension piece 5 extending to the vicinity of the inner periphery of the cooling water passage 16 on the side of the cylinder block 17 and to have a turn piece 6 on the side of the cylinder head 18, and the turn piece 6 of the grommet 4 has its outer periphery close to the outside of the cylinder sleeve 12 and a total thickness T1 of the extension piece 5 of the grommet 4 and the base plate 1 put one upon another forms the largest thickness portion 7 thicker than the other parts T2, T3 and T4.

Further, two difference-in-level beads 9a, 9a are formed in the state in which the base plate 1 and the extension piece 5 of the grommet 4 are in contact with each other from the outside of the turn portion 6 of the grommet 4 to the outer periphery of the cylindrical portion 15 of the cylinder block 17.

On the other hand, a sub-plate 8 formed, for example, from a soft or hard stainless steel plate or an iron plate is secured to the base plate 1 over the upper surface of the outer wall 19 of the cylinder block 17 by a rivet 10 or the like, a total thickness T3 of the sub-plate 8 and the base plate 1 is smaller to the thickness T1 of the largest thickness portion 7, and difference-in-level beads 9a are formed on both or one of the base plate 1 and the sub-plate 8.

As described above, the difference-in-level beads 9a are formed on both sides parted from the largest thickness portion 7 and the cooling water passage 16 whereby the cooling water flowing through the cooling water passage 16 can be well sealed.

In the case where the metal gasket of Fig. 1 is interposed between the mating surface of the cylinder head 18 and the mating surface of the cylinder block 17 and bolted at the position of the outer wall 19 of the cylinder block 17, as shown in Fig. 5, the largest thickness portion 7 has a load F1 which is far greater than bead loads F2, F3. The load F1 of the largest thickness portion 7 forms a primary seal to a clearance between the mating surfaces, and the bead loads F2, F3 form a secondary seal. The clearance between the mating surfaces can be double sealed.

Further, the cylindrical portion 15 of the cylinder block 17 shows its own behavior different from the outer wall 19 of the cylinder block 17 at the time of combustion. However, since a molybdenum film 3b excellent in sliding performance is applied to the outside of the grommet 4, even in the state in which the largest thickness portion 7 having the maximum load F1 is held between the cylinder head 18 and the cylindrical portion 15 of the cylinder block 17, it slidably moves with respect to the own behavior of the cylindrical portion 15, whereby no excessive force occurs in the beads or the like, and the beads or the like can be protected satisfactorily.

Further, the inner peripheral end 4a of the grommet 4 is pressed and collapsed whereby the thickness T4 of the turn piece 6 and the extension piece 5 of the grommet 4 put one upon another is smaller than the largest thickness portion 7.

While the inner peripheral end 4a of the grommet 4 in Fig. 1 is in the state in which the turn piece 6 and the extension piece 5 are pressed, it is noted that both need not always be in contact with each other, but a clearance (Fig. 5) may be formed between the turn piece 6 and the extension piece 5. The inner peripheral end 4a of the grommet 4 does not come in contact with the upper surface of the cylinder sleeve 12, and depression or deformation of the cylinder sleeve 12 does not occur.

Further, in the metal gasket in Fig. 1, a rubber film 3a or a molybdenum film 3b is applied on the side of the cylinder head 18 at the base plate 1. In the case where the rubber film 3a is applied, there is excellent contact with respect to the surface rough of the cylinder head 18 so that blow-bye of combustion can be well prevented. In the case where the molybdenum film 3b is applied, it is useful in protection of beads 8 on both sides since the sliding performance is improved.

Further, the sub-plate 8 to both sides of which the rubber film 3a is applied is secured to the base plate 1 by the rivet 10. In case where the rubber film 3a is applied to both sides of the sub-plate 8, there is provided better contact with respect to the metal surface on the side of the cylinder block 17 at the base plate 1, no exposure to the cooling water passage 16 occurs, and the metal surface on the side of the cylinder block 17 at the base plate 1 does not face to cooling water flowing through the cooling water passage 16 to peel rubber.

### Embodiment 2

The metal gasket shown in Fig. 2, though construction thereof is substantially similar to Embodiment 1, is interposed between the mating surface of the open deck type cylinder block 17, in which the cylinder liner 14 with a flange 13 is provided on the inner periphery of the cylinder bore 11, and the mating surface of the cylinder head 18.

The construction of the metal gasket in the figure is formed so that the largest thickness portion 7 is positioned in the flange 13 of the cylinder liner 14. The maximum load of the largest thickness portion 7 presses the flange 13 of the cylinder liner 14 so as to act on the difference-in-level of the cylinder block 17 supporting the flange 13 to prevent depression and deformation of the cylinder liner 14.

Further, since the molybdenum film 3b having a good sliding performance is applied to the outside of the grommet 4, the largest thickness portion 7 slidably moves with respect to the behavior of the cylindrical portion 15 of the cylinder block 17 whereby no forcible force applies to the beads or the like, and the beads or the like can be protected satisfactorily.

Other points which distinguish the present metal gasket as different from that Embodiment 1 are as follows: The rubber film 3a is applied only on the side of the cylinder block 17 at the sub-plate 8, the contact surface on the side of the base plate 1 at the sub-plate 8 has no film, and the beads are formed in the state in which the sub-plate 8 is secured to the base plate 1 by the adhesive.

By doing so, both are engaged in difference-in-level shape to improve the adhesive property, and the beads can be formed simultaneously on the sub-plate 8 and the base plate 1 thus matched.

The extension piece 5 of the grommet 4 and the base plate 1 form the different-in-level beads 9a with a clearance 20 above the cylindrical portion 15 of the cylinder block 17. While the beads of the base plate 1 and the beads of the extension piece 5 of the grommet 4 come closely in contact with one another have a spring force totaling the bead loads of both beads, as in Embodiment 1, both beads according to Embodiment 2 are separated, whereby the loads of both separated beads are distributed, so that both separated beads can exhibit bead loads smaller than the bead loads of the beads closely in contact.

### Embodiment 3

The metal gasket shown in Fig. 3(b) is, though construction thereof is substantially similar to Embodiment 1, different from Embodiment 1 in a difference-in-level beads 9a formed at the extension piece 5 of the grommet 4 and the method of securing a sub-plate 8 on the base plate 1.

That is, above the cylindrical portion 15 of the cylinder block 17, the base plate 1 is formed with two-stage difference-in-level beads 9a. However, the extension piece 5 of the grommet 4 is formed into a convex difference-in-level to meet the difference-in-level beads 9a on the lower stage side of the base plate 1 and to reversibly part from the difference-in-level beads 9a on the upper stage side of the base plate 1. By the bead shape of the extension piece 5 of the grommet 4 as described above, the bead load totaled to the beads of the base plate 1 can be made higher than the beads closely in contact, enabling the enhancement of the secondary sealing performance provided by these beads.

The method of securing the sub-plate 8 to the base plate 1 comprises a securing means comprising: applying rubber films 3a to both surfaces of the sub-plate 8, and inserting into a through-bole 10b provided in the base plate 4 with a notch 10a of the sub-plate 8 stood upright and turning it, as shown in Fig. 3(b).

### Embodiment 4

The metal gasket shown in Fig. 4 is, though construction thereof is substantially similar to Embodiment I, different from Embodiment 1 in the beads formed above the cylindrical portion 15 of the cylinder block 17, in the beads of the grommet 4, and in the difference-in-level beads 9a of the base plate 1 and the sub-plate 8 formed above the outer wall 19 of the cylinder block 17.

That is, the beads of the base plate 1 formed above the cylindrical portion 15 of the cylinder block 17 are formed into the difference-in-level beads 9a in the vicinity of the turn piece 6 of the grommet 4, the beads 9b circular in section are formed externally thereof, the difference-in-level beads 9a formed on the extension piece 5 of the grommet 4 are placed upon the difference-in-level beads 9a of the base plate 1, and the similar beads 9b circular in section are formed on the side opposite to the beads 9b circular in section of the base plate 1. By doing so, it is possible to form the beads 9b circular in section, contributing to the enhancement of the secondary sealing property due to the bead shape circular in section.

Further, the difference-in-level beads 9a, 9a of the base plate 1 and the sub-plate 8 formed above the outer wall 19 of the cylinder block 17 are formed into the difference-in-level beads 9a in the direction opposed to each other, which beads 9a are substantially registered in bead height with the beads 9b circular in section on the side of the cylindrical portion 15 of the cylinder block 17 so as to provide a balance in the bead height therebetween.

### Embodiment 5

The metal gasket of Fig. 5 is interposed between the mating surface of the open deck type cylinder block 17, in which the cylinder liner 14 with a flange 13 is provided in the inner periphery of the cylinder bore 11, and the mating surface of the cylinder head 18.

The present metal gasket also is, though construction thereof is substantially similar to Embodiment 1, different from Embodiment 1 in the bead construction formed above the cylindrical portion 15 of the cylinder block 17, in the bead construction of the base plate 1 formed above the cuter wall 19 of the cylinder block 1, and in the sub-plate 8.

That is, in the state in which above the cylindrical portion 15 of the cylinder block 17, an intermediate plate 21 is inserted between the base plate 1 and the extension piece 5 of the grommet 4, two-stage difference-in-level beads 9a are formed on the base plate 1 and the extension piece 5 of the grommet 4, and a clearance 20 is formed between the beads 9a, 9b.

As described above, the difference-in-level beads 9a are formed on the intermediate plate 21, materials of the intermediate plate 21 are selected to adjust the hardness of materials, and the clearance 20 is varied whereby the bead load in the secondary seal can be increased and adjusted.

Also, above the outer wall 19 of the cylinder block 17, the difference-in-level beads 9a are formed in the vicinity of the cooling water passage 16 of the base plate 1 and in a state of close contact with the flat sub-plate 8 applied with the rubber films 3a to both surfaces, the beads 9b circular in section are formed externally thereof via the fastening portion of a bolt 23 inserted into the bolt hole 22, and both the sub-plate 8 and the base plate 1 are fixed by the rivet 10.

### EFFECT OF THE INVENTION

As described above, according to the metal gasket of the present invention, the load of the entire metal gasket is that the turn piece of the grommet has its outer periphery close to the outside of the cylinder sleeve or on the upper surface of the flange of the cylinder liner and there provides the greatest load in the largest thickness portion of the extension piece of the grommet and the base plate placed upon one another to provide a primary seal with respect to the clearance between the mating surfaces of the cylinder head and the cylinder block, and the beads formed on the base plate and the extension piece of the grommet from the outside of the turn piece of the grommet to the outer periphery of the cylindrical portion of the cylinder block, and the beads formed on both or one of the sub-plate over the upper surface of the outer wall of the cylinder block and the base plate secured to thereto provide a secondary seal, and the clearance of the mating surface can be double sealed.

Further, in the metal gasket according to the present invention, the largest thickness portion applied with the molybdenum film excellent in sliding performance externally of the grommet is in the state sandwiched between the cylinder head and the cylindrical portion of the cylinder block. The metal gasket is inserted between the mating surface of the open deck type cylinder block, in which the cooling water passage is formed endlessly or half-endlessly in the outer periphery of the cylindrical portion encircling the cylinder bore, and the mating surface of the cylinder head and bolted at the outer wall, in which case it slidably moves with respect to the cylindrical portion indicative of its own behavior different from the outer wall of the cylinder block at the time of combustion explosion, whereby no forcible force occurs in beads or the like, and these can be protected satisfactorily.

Further, since the largest thickness portion exhibits the maximum load of the metal gasket close to the outside of the cylinder sleeve or on the upper surface of the flange of the cylinder liner, the inner peripheral end of the grommet is not in contact with the upper surface of the cylinder sleeve, and no depression or deformation occurs in the cylinder sleeve.

### BRIEF DESCRIPTION OF THE DRAWINGS

- Fig. I: is a sectional view showing Embodiment 1 of a metal gasket according to the present invention.
- Fig. 2: is a sectional view showing Embodiment 2 of a metal gasket according to the present invention.
- Fig. 3(a): is a sectional view showing Embodiment 3 of the present invention, and
- Fig. 3(b): is a sectional view in which a base plate and a sub-plate are secured by a notch of the sub-plate.
- Fig. 4: is a sectional view showing Embodiment 4 of a metal gasket according to the present invention.
- Fig. 5: is a sectional view showing Embodiment 5 of a metal gasket according to the present invention.

## Claims

1. A metal gasket interposed between a mating surface of an open deck type cylinder block (17), in which a cast type cylinder sleeve or a cylinder liner (12) with a flange (13) is provided in the inner periphery of a cylinder bore (11) and a cool water passage (16) is formed endlessly or half-endlessly in the outer periphery of a cylindrical portion encircling the cylinder bore (11), and a mating surface of a cylinder head (18), wherein a grommet (4) applied with a molybdenum film on the outer surface thereof is provided, along the inner periphery of the cylinder bore (11), at a base plate (1) interposed over both the cylindrical portion of said cylinder block (17) and an outer wall (19) forming the outside of said cooling water passage (16), said grommet (4) having an extension piece (5) extending to the vicinity of the inner periphery of said cooling water passage (16) on the cylinder block (17) side and having a turn piece (6) on the cylinder head (18) side, said turn piece (6) having its outer periphery close to the outside of said cylinder sleeve (12) or on the upper surface of the flange (13) of said cylinder liner (14), the total thickness (T1) of the extension piece (5) and the turn piece (6) of said grommet (4) and said base plate (1) put one upon another is the largest thickness thicker than other parts, beads are formed on said base plate (1) and the extension piece (5) of said grommet (4) from the outside of the turn portion (6) of said grommet (4) to the outer periphery of the cylindrical portion (15) of said cylinder block (17), whereas the total thickness of a sub-plate (8) over the upper surface of the outer wall (19) of said cylinder block (17) secured to said base plate (1) is smaller than said largest thickness portion (7), and both of or one of said base plate (1) and said sub-plate (8) are (is) formed with beads.

2. The metal gasket of claim 1, wherein the inner peripheral end of said grommet (4), in the inner peripheral side of the cylinder bore (11), at said base plate (1) is pressed whereby the thickness (T2) of the turn portion (6) and the extension piece of said grommet (4) put upon another is smaller than said largest thickness portion (7).

3. The metal gasket of claim 1, wherein a rubber film (3a) or a molybdenum film (3b) is applied to portions other than said grommet (4).

4. The metal gasket of claim 1, wherein the rubber film (3a) is applied to a contact surface on the base plate side of said sub-plate (8) to secure said sub-plate (8) to said base plate (1) by securing means such as a rivet (10) or the like.

5. The metal gasket of claim 1, wherein the contact surface on the base plate side of said sub-plate (8) is not provided with a film (3), and beads are formed in a state in which said sub-plate (8) is secured to said base plate (1) by an adhesive.

## Patentansprüche

1. Metalldichtung, welche zwischen einer Berührungsfläche eines Zylinderblocks mit offenem Gestell (17), worin eine gegossene Zylinderlaufbuchse oder ein Zylinderrohr (12) mit einem Flansch (13) im Innenumfang einer Zylinderbohrung (11) angeordnet ist, und ein Kühlwasserkanal (16) endlos oder halb endlos im Außenumfang eines zylindrischen Abschnitts, welcher die Zylinderbohrung (11) umgibt, geformt ist, und einer Berührungsfläche eines Zylinderkopfes (18) eingefügt ist,
**dadurch gekennzeichnet,**
**dass** eine Durchführungsdichtung (4) mit einem auf deren Außenfläche aufgetragenen Molybdänfilm entlang des Innenumfangs der Zylinderbohrung (11) an einer Grundplatte (1) angeordnet ist, welche über den zylindrischen Abschnitt des Zylinderblocks (17) sowie über eine Außenwandung (19) eingeschoben ist, welche die Außenseite des Kühlwasserkanals (16) bildet, wobei die Durchführungsdichtung (4) ein Verlängerungsstück (5) aufweist, welches sich bis nahe des Innenumfangs des Kühlwasserkanals (16) auf der Zylinderblockseite (17) erstreckt und ein Drehstück (6) auf der Zylinderkopfseite (18) aufweist, wobei das Drehstück (6) seinen Außenumfang nahe der Außenseite der Zylinderlaufbuchse (12) oder auf der oberen Oberfläche des Flansches (13) des Zylinderrohrs (14) hat;
**dass** die Gesamtdicke (T1) des Verlängerungsstücks (5) und des Drehstücks (6) der Durchführungsdichtung (4) und der Grundplatte (1) übereinander gesetzt die größte Dicke, die dicker als andere Teile ist, darstellt;
**dass** Rippen auf der Grundplatte (1) und dem Verlängerungsstück (5) der Durchführungsdichtung (4) von der Außenseite des Drehabschnitts (6) der Verlängerungsdichtung (4) zum Außenumfang des zylindrischen Abschnitts (15) des Zylinderblocks (17) geformt sind, wobei die Gesamtdicke einer Unterplatte (8) über der oberen Oberfläche der Außenwandung (19) des Zylinderblocks (17), welcher an der Grundplatte (1) befestigt ist, geringer als der Abschnitt größter Dicke (7) ist,
und sowohl die Grundplatte (1) als auch die Unterplatte (8) oder jeweils nur eine der beiden mit Rippen gebildet ist bzw. sind.

2. Metalldichtung nach Anspruch 1,
**dadurch gekennzeichnet,**
**dass** das Innenumfangsende der Durchführungsdichtung (4) in der Innenumfangsseite der Zylinderbohrung (11) an der Grundplatte (1) gepresst wird, wodurch die Dicke (T2) des Drehabschnitts (6) und des Verlängerungsstücks der Durchführungsdichtung (4) übereinander gesetzt geringer als der Abschnitt größter Dicke (7) ist.

3. Metalldichtung nach Anspruch 1,
**dadurch gekennzeichnet,**
**dass** ein Gummifilm (3a) oder ein Molybdänfilm (3b) auf andere Abschnitte als die Durchführungsdichtung (4) aufgetragen wird.

4. Metalldichtung nach Anspruch 1,
**dadurch gekennzeichnet,**
**dass** der Gummifilm (3a) auf eine Berührungsfläche auf der Grundplattenseite der Unterplatte (8) aufgebracht wird, um die Unterplatte (8) an der Grundplatte (1) durch Befestigungsmittel wie beispielsweise einen Niet (10) oder dergleichen zu befestigen.

5. Metalldichtung nach Anspruch 1,
**dadurch gekennzeichnet,**
**dass** die Berührungsfläche auf der Grundplattenseite der Unterplatte (8) nicht mit einem Film (3) versehen wird, und dass Rippen in einem Zustand gebildet werden, in dem die Unterplatte (8) durch einen Kleber an der Grundplatte (1) befestigt ist.

## Revendications

1. Joint métallique interposé entre une surface d'accouplement d'un bloc-cylindres (17) du type à embase ouverte dans lequel une enveloppe de cylindre ou une chemise de cylindre (12) de type coulé, pourvue d'une bride (13), est prévue dans la périphérie interne d'un alésage cylindrique (11) et un passage (16) pour l'eau de refroidissement, continu ou semi-continu, est formé dans la périphérie extérieure d'une partie cylindrique entourant l'alésage cylindrique (11), et une surface d'accouplement d'une culasse (18), dans lequel un oeillet (4) sur la surface extérieure duquel est appliqué un film de molybdène est prévu le long de la périphérie intérieure de l'alésage cylindrique (11), au niveau d'une plaque de base (1) interposée à la fois au-dessus de la partie cylindrique dudit bloc-cylindres (17) et d'une paroi extérieure (19) formant l'extérieur dudit passage (16) pour l'eau de refroidissement, ledit oeillet (4) comprenant une pièce de rallonge (5) s'étendant jusqu'au voisinage de la périphérie intérieure dudit passage (16) pour l'eau de refroidissement sur le côté du bloc-cylindres (17) et comprenant une pièce retournée (6) sur le côté de la culasse (18), la périphérie extérieure de ladite pièce retournée (6) étant proche de l'extérieur de ladite enveloppe de cylindre (12) ou située sur la surface supérieure de la bride (13) de ladite chemise de cylindre (14), l'épaisseur totale (T1) de la pièce de rallonge (5) et de la pièce retournée (6) dudit oeillet (4) et de ladite plaque de base (1) superposées est l'épaisseur maximum, supérieure aux autres pièces, des moulures sont formées sur ladite plaque de base (1) et la pièce de rallonge (5) dudit oeillet (4) de l'extérieur de la partie retournée (6) dudit oeillet (4) vers la périphérie extérieure de la partie cylindrique (15) dudit bloc-cylindres (17), tandis que l'épaisseur totale d'une sous-plaque (8) fixée sur ladite plaque de base (1) au-dessus de la surface supérieure de la paroi extérieure (19) dudit bloc-cylindres (17) est inférieure à ladite partie (7) ayant l'épaisseur maximum et les deux plaques, ladite plaque de base (1) et ladite sous-plaque (8), ou l'une de ces deux plaques, est/sont pourvue/s de moulures.

2. Joint métallique selon la revendication 1, dans lequel l'extrémité de la périphérie intérieure dudit oeillet (4), sur le côté de la périphérie intérieure de l'alésage cylindrique (11), est pressée au niveau de ladite plaque de base (1), l'épaisseur (T2) de la partie retournée (6) et de la pièce de rallonge dudit oeillet (4) superposées étant inférieure à ladite partie (7) ayant l'épaisseur maximum.

3. Joint métallique selon la revendication 1, dans lequel un film en caoutchouc (3a) ou un film de molybdène (3b) est appliqué sur des parties autres que ledit oeillet (4).

4. Joint métallique selon la revendication 1, dans lequel le film en caoutchouc (3a) est appliqué sur une surface de contact sur le côté de ladite sous-plaque (8) correspondant à la plaque de base afin de fixer ladite sous-plaque (8) sur ladite plaque de base (1) grâce à un moyen de fixation tel qu'un rivet (10) ou autre moyen similaire.

5. Joint métallique selon la revendication 1, dans lequel la surface de contact sur le côté de ladite sous-plaque (8) correspondant à la plaque de base n'est pas pourvue d'un film (3), et des moulures sont formées dans un état dans lequel ladite sous-plaque (8) est fixée sur ladite plaque de base (1) par un adhésif.
